Europäisches Patentamt

European Patent Office

Office européen des brevets

(11) Veröffentlichungsnummer: **0 153 472**
A2

(12) **EUROPÄISCHE PATENTANMELDUNG**

(21) Anmeldenummer: 84115366.1

(22) Anmeldetag: 13.12.84

(51) Int. Cl.⁴: **B 01 J 13/02**
B 41 M 5/00, B 41 M 5/12

(30) Priorität: 23.12.83 DE 3346601

(43) Veröffentlichungstag der Anmeldung:
04.09.85 Patentblatt 85/36

(84) Benannte Vertragsstaaten:
AT BE CH DE FR GB IT LI NL SE

(71) Anmelder: Feldmühle Aktiengesellschaft
Fritz-Vomfelde-Platz 4
D-4000 Düsseldorf 11(DE)

(72) Erfinder: Riecke, Kurt, Dr. Dipl.-Chem.
Berliner Allee 34
D-4152 Kempen 1(DE)

(74) Vertreter: Uhlmann, Hans, Dr. rer.nat., Dipl.-Chem.
Gladbacher Strasse 189
D-4060 Viersen 1(DE)

(54) Mikrokapseln mit aus aliphatischem Diisocyanat und Diamin gebildeten Kapselwänden.

㊗ Mikrokapseln, die mittels Grenzflächenaddition aus aliphatischem Diisocyanat und Diamin hergestellte Kapselwände haben und ein Lösungsmittelgemisch mit einem darin gelösten Farbstoffvorläufer enthalten, wobei das Lösungsmittelgemisch eine den Farbstoffvorläufer und das Kapselwandmaterial gut lösende erste Komponente und eine weitere, den Farbstoffvorläufer nur mäßig und das Kapselwandmaterial unzureichend lösende zweite Komponente enthalten, werden unter Verwendung eines Lösungsmittelgemisches hergestellt, bei dem das Mischungsverhältnis von erster und zweiter Komponente so eingestellt ist, daß eine Lösung des wandbildenden aliphatischen Diisocyanats sich in der Mischung der beiden Komponenten gerade am Trübungspunkt befindet.

- 1 -

Mikrokapseln mit aus aliphatischem Diisocyanat
und Diamin gebildeten Kapselwänden

Die Erfindung betrifft Mikrokapseln, die mittels Grenzflächenaddition aus aliphatischem Diisocyanat und Diamin hergestellt sind und die ein Lösungsmittelgemisch mit darin gelöstem Farbstoffvorläufer enthalten, ein Verfahren zu ihrer Herstellung und ihre Verwendung für die Herstellung von druckempfindlichen, kohlefreien Durchschreibepapieren. Mikrokapseln der genannten Art und ihre Verwendung bei der Herstellung von druckempfindlichen, kohlefreien Durchschreibepapieren sind seit vielen Jahren bekannt und z.B. in der DE-A- 29 09 950 beschrieben. Ein Durchschreibesatz aus druckempfindlichen, kohlefreien Durchschreibepapieren besteht im allgemeinen aus zwei oder mehreren lose aufeinander liegenden Papierblättern, wobei das jeweils obere auf der Rück seite eine Geberschicht und das jeweils untere auf der Oberseite eine Nehmerschicht enthält. Es sind aber auch druckempfindliche, kohlefreie Durchschreibepapiere bekannt geworden, bei denen Nehmer-

-2-

und Geberschicht auf einer Seite übereinander angeordnet sind, oder aber Nehmer-und Geberschicht in einer einzigen Schicht vereinigt auf der Oberseite angeordnet sind. Diese Papiere werden auch als - "Selfcontained"-Papiere bezeichnet.

Die Geberschicht wird durch Mikrokapseln gebildet, deren Kernmaterial eine Lösung eines Farbstoffvorläufers in einem organischen Lösungsmittel oder Lösungsmittelgemisch enthält. Die Nemerschicht enthält ein Material, das den Farbstoffvorläufer zum sichtbaren Farbstoff entwickelt. Wird ein Durchschreibesatz aus druckempfindlichen, kohlefreien Durchschreibepapieren beschrieben, so werden die Mikrokapseln durch den hohen Druck des Schreibgerätes zerbrochen und das austretende Kernmaterial trifft auf die den Mikrokapseln benachbarte Nehmerschicht, wob ei eine sichtbare Durchschrift entsteht. Die Nehmerschicht ist im allgemeinen aus einem Bindemittel, einer Elektronen aufnehmenden sauren Substanz und Pigmenten aufgebaut, wobei die Pigmente selbst die Elektronen aufnehmende, saure Substanz darstellen können, wie z.B. Kaolin, Attapulgit, Montmorillonit, Bentonit, saure Bleicherde. Es können aber auch Phenolharze oder feste, organische Säuren als saure Substanz herangezogen werden.

Die Qualität und Gebrauchsfähigkeit eines druckempfindlichen, kohlefreien Durchschreibepapieres wird wesentlich von den dabei verwendeten Mikrokapseln mitbestimmt, insbesondere, was die Verschmutzungsanfälligkeit und die Lagerfähigkeit bis zum Gebrauch

-3-

betrifft. Beobachtungen haben gezeigt, daß die Lagerfähigkeit bis zum Gebrauch eines mit Mikrokapseln beschichteten, druckempfindlichen, kohlefreien Durchschreibepapieres einerseits von dem Siedepunkt bzw. der Verdampfungsgeschwindigkeit des Lösungsmittels bzw. Lösungsmittelgemisches, andererseits von der Dichtigkeit der Kapselwand abhängt. Ebenso könnten gewisse Reizungserscheinungen, die den druckempfindlichen, kohlefreien Durchschreibepapieren manchmal angelastet werden, im Zusammenhang mit der Verdampfungsgeschwindigkeit der Lösungsmittel und der Dichtheit der Kapselwand gesehen werden.

Die DE-A- 29 09 950 hat bereits versucht, eine befriedigende Mikrokapsel zur Verfügung zu stellen. Dort wird eine Mikrokapsel beschrieben, die eine Lösung eines Farbstoffvorläufers enthält. Der Farbstoffvorläufer ist in einem organischen Lösungsmittelgemisch gelöst und ist in dem Polyadditionsprodukt aus einem aliphatischen Diisocyanat und einem Polyamin eingekapselt. Als Lösungsmittelgemisch für den Farbstoffvorläufer wird Alkylnaphtalin, dem als Verschnittmittel Isopraffin mit 10 bis 20 Kohlenstoffatomen zugesetzt ist, benutzt. Die Mikrokapseln werden werden nach ihrer Bildung mindestens 2 Stunden bei 60 bis 70 Grad C getempert, um die Umsetzung zwischen aliphatischem Diisocyanat und Polyamin zu vervollständigen. Bei der Umsetzung des Verfahrens nach der DE-A- 29 09 950 in die Praxis hat es sich jedoch gezeigt, daß dieses Verfahren und die danach hergestellten Mikrokapseln mit verschiedenen Nachteilen behaftet sind. Zum einen steht das vorge-

-4-

schlagene Alkylnaphtalin insbesondere das Diisopropylnaphtalin nicht immer in ausreichender Menge zur Verfügung bzw. ist seine Beschaffung schwierig, zum anderen weist das Isoparaffin eine relativ große Verdampfungsgeschwindigkeit auf, die sich nachteilig auf die Lagerbeständigkeit der Kapsel auswirkt.

Aufgabe der vorliegenden Erfindung ist es Mikrokapseln der eingangs beschriebenen Art, deren Kapselwandmaterial aus Diisocyanat und Diamin besteht, hinsichtlich ihrer Wandundurchlässigkeit und Lagerfähigkeit zu verbessern und dabei ein Lösungsmittelgemisch aus ausreichend verfügbaren und wirtschaftlichen Lösungsmittelkomponenten zu verwenden.

Weitere Aufgaben der vorliegenden Erfindung bestehen in der Entwicklung eines Verfahrens zur Herstellung der genannten Mikrokapseln und in deren Verwendung bei der Herstellung von druckempfindlichen, kohlefreien Durchschreibepapieren.

Die Aufgabe wird bei Mikrokapseln der eingangs beschriebenen Art durch die kennzeichnenden Merkmale von Anspruch 1 gelöst.

Es hat sich überraschenderweise gezeigt, daß nur dann undurchlässige und gut lagerungsfähige Mikrokapseln erhalten werden, wenn das Lösungsmittelgemisch für den Farbstoffvorläufer und das aliphatische Diisocyanat so eingestellt wird, daß gerade der Trübungspunkt des aliphatischen Diisocyanats erreicht wird. Unter dem Trübungspunkt wird die erste

-5-

mittels eines Nephelometers messbare Trübung verstanden, die dann auftritt, wenn zu der Lösung des aliphatischen Diisocyanats in der das aliphatische Diisocyanat gut lösenden ersten Komponente die erforderliche Menge der schlecht bzw. mäßig lösenden zweiten Komponente zugeben wird.

Eine genaue Erklärung für den überraschenden Effekt kann nicht gegeben werden. Es darf jedoch angenommen werden, daß bei der Kapselwandbildung aufgrund der Grenzflächenadditionsreaktion zwischen aliphatischem Diisocyanat und zugesetztem Polyamin das Diisocyanat bestrebt ist, wegen der schlechten Löseeigenschaften des Lösungsmittelgemisches fast vollständig aus diesem an die Grenzfläche heranzutreten und dort mit dem in der umgebenden wässrigen Phase befindlichen Polyamin zu reagieren. Aus der DE-A- 29 09 950 ist es bekannt, daß für eine gerade ausreichende Kapselwandbildung mindestens 15 Gew.% aliphatisches Diisocyanat als Kapselwandbildungskomponente erforderlich sind. Dabei wird nichts über die erfindungsgemäße Einstellung des Lösungsmittelgemisches ausgesagt, und es muß daher angenommen werden, daß das aliphatische Diisocyanat sich langsamer oder unvollkommener aus der Lösung abscheidet und zur Wandbildung beiträgt und daraus die mangelnde Undurchlässigkeit resultiert. Werden nun ebenfalls 15 Gew.% aliphatisches Diisocyanat als Wandbildungskomponente in dem erfindungsgemäßen Lösungsmittelgemisch eingesetzt, so erhält man aufgrund der oben geschilderten Vorgänge Mikrokapseln mit wesentlich verbesserter Wandundurchlässigkeit und Lagerfähig-

-6-

keit.

Das in der DE-A- 29 09 950 eingesetzte Lösungsmittel Isoparaffin ist ein extrem schlechter Löser für das aliphatische Diisocyanat und den eingesetzten Farbstoffbildner. Es wurde nun gefunden, daß der Anteil des guten Lösungsmittels für das aliphatische Diisocyanat erheblich reduziert werden kann, wenn das schlechte Lösungsmittel den Farbstoffvorläufer ausreichend löst und zugleich gegenüber dem aliphatischen Diisocyanat ein schlechter bis mäßiger Löser ist. Erfindungsgemäß wird ein Lösungsmittelgemisch eingesetzt, dessen Mischungsverhältnis von gut und schlecht lösender Komponente sich von 15 : 85 bis 75 : 25 Vol% erstreckt. Somit ist es möglich, den Anteil der nicht ausreichend zur Verfügung stehenden und unwirtschaftlichen Alkylnaphtaline zu senken.

Eine das aliphatische Diisocyanat schlecht lösendes Lösungsmittelkomponente sollte jedoch folgende Bedingungen erfüllen:
die Entwicklung des Farbbildes darf nicht beeinträchtigt werden. Die Viskosität soll niedrig sein. Das Lösungsmittel soll keinen Geruch aufweisen. Der Siedepunkt soll möglichst hoch sein. Die Verdampfungsgeschwindigkeit soll möglichst klein sein. Das Lösungsmittel muß ungiftig sein. Es soll ein genügendes Lösevermögen für den Farbstoffvorläufer aufweisen. Der Stockpunkt soll möglichst niedrig sein. Es muß unlöslich in Wasser sein und verschneidbar mit guten Lösungsmitteln für die aliphatischen Diisocyanate. Darüberhinaus soll es wirtschaftlich und

-7-

ausreichend verfügbar sein.

Es wurde schon vorgeschlagen, preiswerte Pflanzenöle, wie z.B. Sonnenblumenöl, einzusetzen. Jedoch sind derartige Öle für den gedachten Ansatzzweck zu hochviskos, lösen die Farbstoffvorläufer und das aliphatische Diisocyanat schlecht und behindern die Farbentwicklung auf der Farbnehmerschicht.

Es wurde ferner gefunden, daß Akylbenzole die Bedingungen, die an die schlecht lösende zweite Komponente gestellt werden, zufriedenstellend erfüllen. Besonders geeignet sind dafür die n-Alkylbenzole, insbesondere solche mit 8 bis 14 C-Atomen. Ganz besonders bevorzugt wird das n-Dodecylbenzol als schlecht lösende zweite Komponente für das aliphatische Diisocyanat eingesetzt, da es ausreichend zur Verfügung steht, niedrigen Dampfdruck hat, toxikologisch unbedenklich ist und auch wirtschaftlich ist.

Als gut lösende erste Komponente für das aliphatische Diisocyanat wird Diiosopropylnaphtalin, hydriertes Terphenyl, alkyliertes Diphenyl, Diphenylalkan oder insbesondere Chlorparaffin einzeln oder in Mischung in dem Lösungsmittelgemisch eingesetzt. Dabei richtet sich das Verhältnis von mäßig bzw. unzureichend lösender zweiter Komponente zur gut lösenden ersten Komponente nach den Löseeigenschaften der ersten Komponente für das aliphatische Diisocyanat. Sehr gut geeignet sind Chlorparaffine, insbesondere solche mit einem Schnitt aus n-C14 bis

-8-

n-C 17 mit einem Chlorgehalt von ca. 45 % Chlor.
Ganz besonders bevorzugt wird ein stabilisiertes
Chlorparaffin eingesetzt, wie es in der DE-A- 27 02
017 beschrieben ist.

Im Rahmen der vorliegenden Erfindung können die in
der DE-A- 29 09 950 beschriebenen Farbstoffvorläufer
verwendet werden. Als Kapselwandmaterialien finden
die in der gleichen Schrift beschriebenen Verbindungen Anwendung.

Die Erfindung wird anhand der nachfolgenden Beispiele näher erläutert, ohne daß die Erfindung auf
diese Beispiele beschränkt ist.

Die Herstellung der Mikrokapseln findet dabei nach
dem in der DE-A- 29 09 950 angegebenen Verfahren
statt:

das aliphatische Diisocyanat und der gewünschte
Farbstoffvorläufer werden zunächst in der gut lösenden ersten Komponente gelöst und die zur Erreichung des Trübungspunktes ermittelte Menge der mäßig
bzw. unzureichend lösenden zweiten Komponente zugegeben. Diese organische Phase wird in einer wässrigen Phase, die auch Schutzkolloide enthält, emulgiert. Zu dieser Emulsion wird dann eine wässrige
Polyaminlösung in stöchiometrischer Menge zugesetzt.
Als Schutzkolloid kann z.B. Polyvinylalkohol eingesetzt werden. Die Mikrokapseln können grundsätzlich
kontinuierlich oder diskontinuierlich hergestellt
werden. Dazu werden Dispergiergeräte eingesetzt, die

-9-

ein hohes Schwergefälle erzeugen, wie z.B. Blatt- oder Korbschnellrührer, Kolloidmühlen, Ultraschall- dispergatoren, Düsen, Strahldüsen oder Supratonma- schinen. Die gewünschte Größe der Mikrokapseln wird durch das bei der Dispergierung angewandte Schergefälle vorherbestimmt. Die auf diese Art hergestellten Mikrokapseln agglomerieren nicht und haben eine enge Teilchengrößenverteilung. Die erhaltenen Mikrokapselsuspensionen enthalten im allgemeinen 10 bis 40 Gew.% Kapseln. Die oben beschriebene Reihenfolge der Zugabe ist in bezug auf die Zugabe der zweiten Komponente zu der Lösung des aliphatischen Diisocyanats und des Farbstoffvorläufers in der ersten Komponente nicht zwingend. Wenn für eine be- stimmte Zusammensetzung der einzelnen Mischungsbe- standteile der Trübungspunkt ermittelt ist, können die erste und zweite Komponente erfindungsgemäß auch zuerst abgemischt und ihnen anschließend Farbstoffvorläufer und aliphatisches Diisocyanat zugesetzt werden. Zur Erzeugung von druckempfindlichen, kohlefreien Durchschreibepapieren werden den Mikrokapselsuspensionen Bindemittel und ggf. innerte Füllstoffe sowie Abstandshalter zugemischt und diese Dispersionen gemäß DE-A- 19 34 457 oder DE-A- 19 55 542 auf Trägerpapiere aufgetragen. Die so beschichteten Papiere enthalten die erste Farbbildungskomponente, sie werden als Geberkomponente bezeichnet. Zur Erzeugung von Durchschriften werden die mit der Geberkomponente beschichteten Trägerpapiere mit weiteren Trägerpapieren in Kontakt gebracht, die mit einer Nehmerschicht beschichtet sind, wie sie z.B. ebenfalls in der DE-A- 19 34 457 und DE-A- 19 55 542

-10-

beschrieben sind.

Beispiel 1

16 g Farbstoffvorläufer werden in 135,6 ml Diisopropylnaphtalin unter Rühren und Erwärmen bis max. 90 Grad C gelöst. Die Lösung wird auf ca. 40 Grad C abgekühlt und unter Rühren 37,77 ml Oxadiazindiisocyanat zugesetzt. Dieser Lösung wird dann unter Rühren n-Dodecylbenzol bis zum Erreichen des Trübungspunktes hizugefügt. Dazu sind genau 125,2 ml n-Dodecylbenzol erforderlich. Diese organische Phase wird in 597,2 ml 0,58 %-ige wässriger Polyvinylalkohollösung gegeben und mit einem hochtourigen Schnellrührer emulgiert, wobei eine Tröpfchengröße von 7 $\mu$m erreicht wird. Dieser Emulsion wird unter Rühren eine ca. 6 %-ige Aminlösung, bestehend aus 8 g Diäthylentriamin in 124,6 ml entsalztem Wasser, zugefügt. Die Polyaminmenge ist stöchiometrisch auf das Diisocyanat berechnet. Die Zugabe erfolgt bei ca. 38 Grad C. Die Suspension wird bei ca. 38 Grad C 30 Minuten weitergerührt, dann in einer Zeitspanne von 80 bis 90 Minuten auf 60 Grad C erhitzt und 150 Minuten bei 60 Grad C nachgerührt. Die so erhaltene Mikrokapselsuspension enthält ca. 30 Gew.% Mikrokapseln mit einer mittleren Teilchengröße von 7 $\mu$m.

Beispiel 2

16 g Farbstoffvorläufer werden in 96,48 ml eines stabilisierten Chlorparaffins, das aus einem n-C14-n-C17-Schnitt mit einem Chlorgehalt von 45 % besteht, und 82,3 ml n-Dodecylbenzol unter Rühren bei einer Temperatur nicht über 98 Grad C gelöst. Die

-11-

Lösung wird auf 40 Grad C gekühlt und unter Rühren werden 35,78 ml Oxadiazintriondiisocyanat in dem System gelöst. Der klaren Lösung werden unter Rühren nochmals 82 ml n-Dodecylbenzol zugefügt, so daß der Trübungspunkt für das Oxadiazintriondiisocyanat erreicht wird. Diese organische Phase wird anschließend in 597,2 ml einer 0,58 %-igen Polyvinylalkoholösung mit einem hochtourigen Schnellrührer emulgiert, so daß eine mittlere Teilchengröße von 7 $\mu$m erreicht wird. Diese Emulsion wird auf 25 bis 28 Grad C abgekühlt und bei dieser Temperatur unter Rühren eine 6 %-ige Aminlösung, bestehend aus 8 g Diäthylentriamin in 124,6 ml entsalztem Wasser zugefügt. Das Polyamin ist stöchiometrisch auf das Diisocyanat berechnet. Die Suspension wird bei 25 bis 30 Grad C 30 Minuten weitergerührt, dann in 180 Minuten auf 60 Grad C erhitzt und 150 Minuten bei 60 Grad C nachgerührt. Die so erhaltene Mikrokapselsuspension enthält 31,2 Gew.% Mikrokapseln mit einer mittleren Teilchengröße von 7 $\mu$m.

Vergleichsbeispiel

16 g Farbstoffvorläufer werden in 200 ml Diisopropylnaphtalin durch Erwärmen nicht über 90 Grad C und unter Rühren klar gelöst und zu dieser Lösung nach dem Abkühlen auf 40 Grad C unter Rühren 37,77 ml Oxadiazintriondiisocyanat hinzugefügt und danach 60,8 ml Isohexadekan zugegeben. Der Trübungspunkt wird dabei nicht erreicht. Die organische Phase wird in 597,2 ml 0,5 %-ige wässrige Polyvinylalkohollösung gegeben und mit einem hochtourigen Schnellrührer emulgiert, wobei eine Tröpfchengröße von 7 $\mu$m

-12-

erreicht wird. Dieser Emulsion wird unter Rühren eine 6 %-ige Aminlösung, bestehend aus 8 g Diäthylentriamin, in 124,6 ml entsalztem Wasser zugefügt. Das Polyamin ist stöchiometrisch auf das Diisocyanat berechnet. Die Aminzugabe erfolgt bei ca. 38 Grad C. Die Suspension wird bei ca. 38 Grad C 30 Minuten weitergerührt, dann in 180 Minuten auf 60 Grad C erhitzt und 150 Minuten bei 60 Grad C nachgerührt. Die so erhaltene Mikrokapselsuspension enthält 30 Gew.% Mikrokapseln mit einer mittleren Teilchengröße von 7 µm.

Die nach den Beispielen 1 und 2 und nach dem Vergleichsbeispiel erhaltenen Mikrokapseln werden auf Alterungsstabilität und Dichtigkeit der Kapseln geprüft. Mit der Alterungsstabilität wird eine Aussage über die Gebrauchsfähigkeit in Abhängigkeit von der Lagerzeit beim Endverbraucher erhalten. Die Dichtigkeit der Mikrokapseln erlaubt eine Aussage über die Verschmutzungsneigung der mit diesen Mikrokapseln beschichteten druckempfindlichen, kohlefreien Durchschreibepapieren. Die Prüfung der Alterungsstabilität der Kapseln wird wie folgt ausgeführt:
ein Trägerpapier wird mit einer vorbestimmten Menge der zu prüfenden Mikrokapseln beschichtet, anschließend wird die beschichtete Seite mit der Nehmerschicht eines zweiten Durchschreibepapieres in Kontakt gebracht und ein flächiger Abdruck erzeugt. Der auf der Nehmerschicht entstandene farbige flächige Abdruck wird mit Hilfe eines Remissionsmessgerätes gemessen und der Verlust an Reflektion ge-

-13-

genüber dem nicht beschrifteten Papier bestimmt.
Vier weitere Proben des mit Kapseln beschichteten
Papieres werden in einer Klimakammer bei 70 Grad C
und 75 % relativer Luftfeuchtigkeit getempert über
einen Zeitraum von 3, 6, 12 und 18 Tagen. Nach der
jeweiligen Lagerzeit wird die Erzeugung eines Abdruckes wiederholt und wiederum eine Remissionsmessung durchgeführt. Die gemessenen Remissionswerte
werden mit der ursprünglich gemessenen, sogenannten
Nullprobe, in Beziehung gesetzt und der sogenannte
Intensitätsverlust in % angegeben.

Zur Ermittlung der Dichtigkeit der Mikrokapseln wird
wie folgt verfahren:
6,66 g einer 30 %-igen Kapselsuspension werden mit
10,83 ml demineralisiertem Wasser vermischt und danach mit 10 g einer äußerst feindispersen alkalisch
stabilisierten wässrigen Kieselsäuredispersion
vorsichtig vermischt. Ein Blatt Trägerpapier wird
auf einer plan geschliffenen Glasplatte glatt und
straff aufgespannt und danach die Mischung mittels
eines 30 um Erickson-Rakels aufgetragen. Das beschichtete Blatt wird sofort im Luftstrom bei 40 bis
60 Grad C während 3 Minuten vorsichtig getrocknet.
Anschließend wird die Remission des unbeschichteten
Blattes und die Remission des beschichteten Blattes
mit Hilfe eines elektrischen Remissionsmessgerätes
gemessen. Die Differenz der Remissionswerte ergibt
die Farbintensität der aufgebrachten Beschichtung.
Das beschichtete Blatt wird 1, 2 und 4 Stunden bei
70 Grad C und 75 % relativer Luftfeuchte in einem
Klimaschrank gelagert und zu den angegebenen Zeiten

-14-

jeweils die Remission des unbeschichteten Blattes und des beschichteten Blattes gemessen. Je geringer die Zunahme der Intensität ist, um so besser ist die Undurchlässigkeit der Kapselwand.

Die Ergebnisse der Prüfung auf Alterungsstabilität und Dichtigkeit Mikrokapseln sind in der nachfolgenden Tabelle dargestellt:

| Beispiel | | 1 | 2 | Vergleichs-beispiel |
|---|---|---|---|---|
| Farbstoffvorläufer | | 16 g | 16 g | 16 g |
| aliph. Diisocyanat | | 37,77 ml | 35,78 ml | 37,77 ml |
| Diisopropylnaphtalin | | 135,6 ml | – | 200,0 ml |
| Isohexadekan | | – | – | 60,8 ml |
| n-Dodecylbenzol | | 125,2 ml | 164,3 ml | – |
| Chlorparaffin | | – | 96,5 ml | – |
| | | | | |
| Wanddichte-Test | | | | |
| Intensität | 0 h | 0,2 | 0,2 | 0,9 |
| | 1 h | 1,1 | 0,7 | 1,4 |
| | 2 h | 1,5 | 1,0 | 2,2 |
| | 4 h | 1,7 | 1,4 | 2,7 |
| | | | | |
| Alterungs-stabilität | 3 d | 4,8 % | 5,4 % | 14,6 % |
| Intensitäts- | 6 d | 9,5 % | 7,3 % | 19,7 % |
| verlust | 12 d | 23,8 % | 9,9 % | 27,4 % |
| | 18 d | 35,7 % | 29,7 % | 48,7 % |

-15-

Die Qualität der erfindungsgemäßen Mikrokapseln, die n-Dodecylbenzol als schlecht lösende zweite Komponente enthält, ist deutlich verbessert. Wird anstelle der gut lösenden ersten Komponente Diisopropylnaphtalin ein Chlorparaffin, das aus dem n-C14- bis n-C17-Schnitt mit 45 % Chlor besteht, verwendet, so kann der Anteil der schlecht lösenden zweiten Komponente n-Dodecylbenzol sogar von 48 Vol.% auf 63 Vol%, bezogen auf das Komponentengemisch, angehoben werden. Gegenüber dem Vergleichsbeispiel konnte in Beispiel 1 der erforderliche Anteil an Diisopropylnaphtalin von ursprünglich 77 Vol.% auf 52 Vol.% gesenkt werden bzw. die gut lösende erste Komponente wurde in Beispiel 2 vollständig durch das Chlorparaffin ersetzt, wobei die Qualität der erfindungsgemäßen Mikrokapsel noch weiter gesteigert werden konnte. Wie das Beispiel 2 insbesondere zeigt, kann auch der Anteil des aliphatischen Diisocyanates um 6 %, bezogen auf die ursprüngliche Diisocyanatmenge, reduziert werden, ohne daß die Kapselqualität dadurch eine Beeinträchtigung erfährt, vielmehr weist gerade die Kapsel des Beispiels 2 die beste Lagerbeständigkeit und Wandundurchlässigkeit auf.

-16-

Patentansprüche

1. Mikrokapseln mit aus aliphatischem Diisocyanat und Diamin gebildeten Kapselwänden, enthaltend ein Lösungsmittelgemisch mit einem darin gelösten Farbstoffvorläufer, wobei das Lösungsmittelgemisch eine den Farbstoffvorläufer und das Kapselwandmaterial gut lösende erste Komponente und eine den Farbstoffvorläufer nur mäßig und das Kapselwandmaterial unzureichend lösende zweite Komponente enthält, dadurch gekennzeichnet, daß das Mischungsverhältnis von erster und zweiter Komponente so eingestellt ist, daß sich eine Lösung des wandbildenden aliphatischen Diisocyanats in der Mischung der beiden Komponenten gerade am Trübungspunkt befindet.

2. Mikrokapseln nach Anspruch 1, dadurch gekennzeichnet, daß sich das Mischungsverhältnis von erster und zweiter Komponente von 15 : 85 bis 75

-17-

: 25 Vol.% erstreckt.

3. Mikrokapseln nach einem der Ansprüche 1 und 2, dadurch gekennzeichnet, daß die zweite Komponente ein Alkylbenzol ist.

4. Mikrokapseln nach einem der Ansprüche 1 bis 3, dadurch gekennzeichnet, daß die zweite Komponente ein n-Alkylbenzol ist.

5. Mikrokapseln nach einem der Ansprüche 1 bis 4, dadurch gekennzeichnet, daß die zweite Komponente ein n-Alkylbenzol mit 8 bis 14 C-Atomen ist.

6. Mikrokapseln nach einem der Ansprüche 1 bis 5, dadurch gekennzeichnet, daß die zweite Komponente ein n-Dodecylbenzol ist.

7. Mikrokapseln nach einem der Ansprüche 1 bis 6, dadurch gekennzeichnet, daß die erste Komponente ein Diisopropylnaphtalin, ein hydriertes Terphenyl, ein alkyliertes Diphenyl, ein Diphenylalkan, ein Chlorparaffin und/oder eine Mischung dieser Verbindungen ist.

8. Mikrokapseln nach Anspruch 7, dadurch gekennzeichnet, daß bei Chlorparaffin als erster Komponente das Chlorparaffin stabilisiert ist.

9. Verfahren zur Herstellung von Mikrokapseln nach

-18-

einem der Ansprüche 1 bis 8, dadurch gekennzeichnet, daß zunächst aliphatisches Diisocyanat und Farbstoffvorläufer in der gut lösenden ersten Komponente gelöst werden und dieser Mischung eine solche Menge der zweiten Komponenten zugegeben wird, daß gerade der Trübungspunkt erreicht wird, daß anschließend diese aus aliphatischem Diisocyanat, Farbstoffvorläufer, erster und zweiter Komponente bestehende Mischung in einer Schutzkolloide enthaltenden wässrigen Phase emulgiert wird, worauf der dabei gebildeten Emulsion eine stöchiometrisch auf das Diisocyanat berechnete wässrige Aminlösung zur Durchführung der Grenzflächenreaktion zugegeben wird und unter Erwärmung für eine Zeit von mindestens 2 Stunden weiter gerührt wird.

10. Verwendung der Mikrokapseln nach einem der Ansprüche 1 bis 8 zur Herstellung eines druckempfindlichen, kohlefreien Durchschreibpapieres.